(19) Europäisches Patentamt
European Patent Office
Office européen des brevets

(11) Veröffentlichungsnummer: **0 402 678 B1**

(12) **EUROPÄISCHE PATENTSCHRIFT**

(45) Veröffentlichungstag der Patentschrift: **02.11.95**

(51) Int. Cl.$^{6}$: **C08L 69/00**, G02B 1/04

(21) Anmeldenummer: **90109912.7**

(22) Anmeldetag: **24.05.90**

# (54) Verwendung von Polycarbonatmischungen in der Optik.

(30) Priorität: **06.06.89 DE 3918406**

(43) Veröffentlichungstag der Anmeldung:
**19.12.90 Patentblatt 90/51**

(45) Bekanntmachung des Hinweises auf die Patenterteilung:
**02.11.95 Patentblatt 95/44**

(84) Benannte Vertragsstaaten:
**DE FR GB IT**

(56) Entgegenhaltungen:
**EP-A- 0 166 834** **EP-A- 0 177 713**
**EP-A- 0 274 092** **EP-A- 0 279 287**
**EP-A- 0 312 860** **EP-A- 0 359 953**
**EP-A- 0 362 646** **EP-A- 0 387 631**
**EP-A- 0 393 454** **EP-A- 0 396 958**

(73) Patentinhaber: **BAYER AG**
**D-51368 Leverkusen (DE)**

(72) Erfinder: **Westeppe, Uwe, Dr.**
**Vogelskamp 72**
**D-4020 Mettman (DE)**
Erfinder: **Weymans, Günther, Dr.**
**Körnerstr. 5**
**D-5090 Leverkusen 1 (DE)**
Erfinder: **Freitag, Dieter, Dr.**
**Hasenheide 10**
**D-4150 Krefeld (DE)**
Erfinder: **Idel, Karsten-Josef, Dr.**
**Am Schwarzkamp 38**
**D-4150 Krefeld (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 402 678 B1

## Beschreibung

Gegenstand der deutschen Patentanmeldung P 3 833 953.6 sind Mischungen von a) speziellen, neuen Polycarbonten mit b) Elastomeren oder mit anderen Thermoplasten als den speziellen neuen Polycarbonaten der Komponente a) und gegebenenfalls c) üblichen Additiven, sowie Verfahren zur Herstellung dieser Mischungen.

Einzelheiten sind dem anschließend aufgeführten Wortlaut dieser deutschen Patentanmeldung P 3 833 953.6 auf den Seiten 2 bis 36 der vorliegenden Patentanmeldung zu entnehmen:

Gegenstand der deutschen Patentanmeldung P 3 833 953.6 sind Mischungen, enthaltend

a) thermoplastische Polycarbonate auf Basis von Diphenolen der Formel (I)

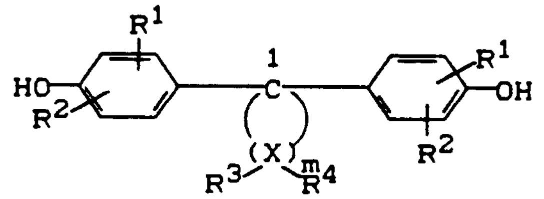

(I),

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, $R^3$ und $R^4$ gleichzeitig Alkyl ist,

und

b) Elastomere oder andere Thermoplasten als die der Komponente a) und gegebenenfalls

c) übliche Additive,

sowie Verfahren zu ihrer Herstellung.

In der deutschen Patentanmeldung P 3 832 396.6 sind die Polycarbonate (a) sowie ihre Ausgangsprodukte und ihre Herstellung beschrieben.

Ausgangsprodukte für die Polycarbonate (a) sind Dihydroxydiphenylcycloalkane der Formel (I)

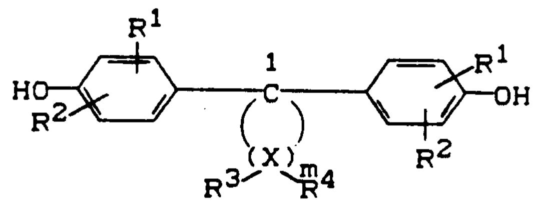

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$, für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X $R^3$ und $R^4$ gleichzeitig Alkyl bedeuten.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyl-disubstitution in $\beta$-Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (I)), beispielsweise die Diphenole der Formeln

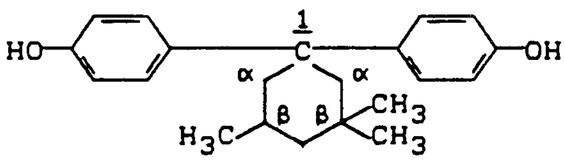

(II)

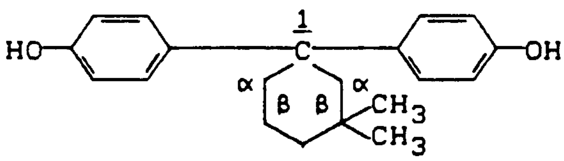

(III) und

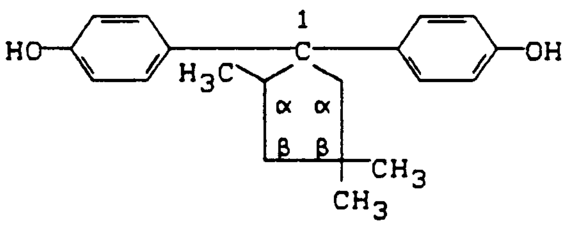

(IV),

wobei das 1,1-Bis-(4-hydroxyphenyl)-3.3.5-trimethylcyclohexan (Formel II) besonders bevorzugt ist.

Die Dihydroxydiphenylcycloalkane der Formel (I) können in an sich bekannter Weise durch Kondensation von Phenolen der Formel (V)

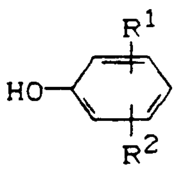

(V)

und Ketonen der Formel (VI)

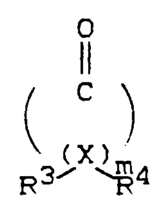

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, Phenylphenole und o-Benzylphenol.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488-1492, US-PS 2 692 289, Allen et al., J. Chem. Soc, (1959), 2186-2192 und J. Org. Chem. Vol. 38, (1973), Seiten 4431-4435, J. Am. Chem. Soc 87, (1965), Seite 1353-1364. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VI) sind:

3,3-Dimethylcyclopentanon, 3,3-Dimethylcyclohexanon, 4,4-Dimethylcyclohexanon, 3-Ethyl-3-Methylcyclopentanon, 2,3,3-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 3,3,5-Trimethylcyclohexanon, 3,4,4-Trimethylcyclohexanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 2-Butyl-3,3,4-trimethylcyclopentanon, 2-Butyl-3,3,4-trimethylcyclohexanon, 4-Butyl-3,3,5-trimethylcyclohexanon,3-Isohexyl-3-methylcyclohexanon, 2,2-Dimethylcyclooctanon, und 3,3,8-Trimethylcyclooctanon.

Beispiele für bevorzugte Ketone sind

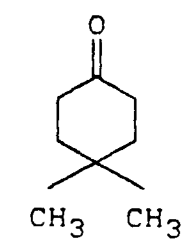

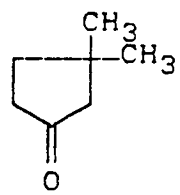

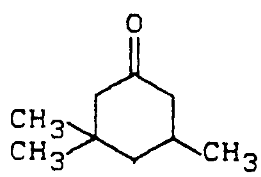

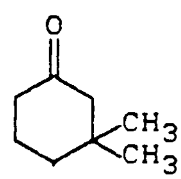

und

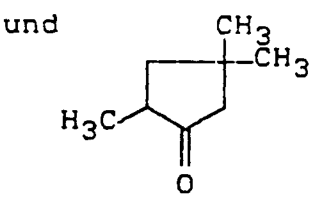

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30 °C bis 300 °C, vorzugsweise von -15 °C bis 150 °C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden, bevorzugt in Mengen von 0,01 - 0,4 Mol/Mol Keton, insbesondere bevorzugt 0,05 - 0,2 Mol/Mol Keton beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Man kann Phenol (V) und Keton (VI) im Molverhältnis (V) : (VI) zwischen 2:1 und 10:1, vorzugsweise zwischen 2,5 : 1 und 6 : 1 bei Temperaturen zwischen -30 °C und 300 °C, vorzugsweise zwischen -15 °C und 150 °C und bei Drücken von 1 bis 20 bar, vorzugsweise von 1 bis 10 bar in Anwesenheit saurer Katalysatoren und gegebenenfalls in Anwesenheit von Co-Katalysatoen und/oder Lösungsmitteln und/oder wasserentziehenden Mitteln umsetzen.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in $\alpha$-Stellung zu dem di-phenylsubstituierten C-Atom (C-1) sind bevorzugt nicht dialkylsubstituiert, dagegen ist die Disubstitution mit Alkyl in $\beta$-Stellung in C-1 bevorzugt.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert. Die folgende Vorschrift veranschaulicht die

Herstellung des Diphenols der Formel (II)

Beispiel A

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30 °C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.
Ausbeute: 370 g
Schmelzpunkt: 205 bis 207 °C
Die Polycarbonate (a) können gemäß der deutschen Patentanmeldung P 3 832 396.6 aus Diphenolen der Formel (I) hergestellt werden.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis(hydroxyphenyl)-diisopropylbenzole
sowie deren kernalkylierte und kernhalogenierte Verbindungen.

Diese und weitere geeignete andere Diphenole sind z.B. in den US-A-3 028 365, 2 999 835, 3 148 172, 3 275 601, 2 991 273, 3 271 367, 3 062 781, 2 970 131 und 2 999 846, in den DE-A-1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind beispielsweise:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (VII), soll zwischen 100 Mol-% (I) zu 0 Mol-% anderem Diphenol und 2 Mol-% (I) zu 98 Mol-% anderem Diphenol, vorzugsweise zwischen 100 Mol% (I) zu 0 Mol-% anderem Diphenol und 5 Mol% (I) zu 95 Mol% anderem Diphenol und insbesondere zwischen 100 Mol%(I) zu 0 Mol% anderem Diphenol und 10 Mol% (I) zu 90 Mol% anderem Diphenol und ganz besonders zwischen 100 Mol% (I) zu 0 Mol% anderem Diphenol und 20 Mol% (I) zu 80 Mol% anderem Diphenol.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol% (bezogen auf eingesetzte Diphenole), an drei-oder mehr als drei-funktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate (a) dienen monofunktionelle Verbindungen in üblichen Konzentrationen. Geeignete Verbindungen sind z.B Phenol, tert.-Butylphenole oder andere Alkyl-$C_1$-$C_7$-substituierte Phenole. Zur Regelung des Molekulargewichts sind insbesondere kleine Mengen Phenole der Formel (VIII) geeignet

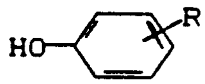

(VIII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate (a) können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII), eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0 ° C und 40 ° C.

Die gegebenenfalls mitverwendeten Verzweiger (bevorzugt 0,05 bis 2 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (I) und gegebenenfalls anderen Diphenolen (VII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (I) und gegebenenfalls Formel (VII); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate (a) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate (a) können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate (a) haben bevorzugt Molekulargewichte $\overline{M}w$ (Gewichtsmittel, ermittelt durch Gelchromatographie nach vorheriger Eichung) von mindestens 10 000, besonders bevorzugt von 10 000 bis 300 000 und für Anwendungen in Spritzgußbereich insbesondere von 20 000 bis 80 000. Sie können linear oder verzweigt sein, sie sind Homopolycarbonate oder Copolycarbonate auf Basis der Diphenole der Formel (I).

Polycarbonate (a) im Sinne der Erfindung sind somit hochmolekulare, thermoplastische, aromatische Polycarbonate mit $\overline{M}w$ (Gewichtsmittelmolekulargewichten) von mindestens 10 000, vorzusweise von 10 000 bis 200 000 und insbesondere von 20 000 bis 80 000, die bifunktionelle Carbonatstruktureinheiten der Formel (Ia)

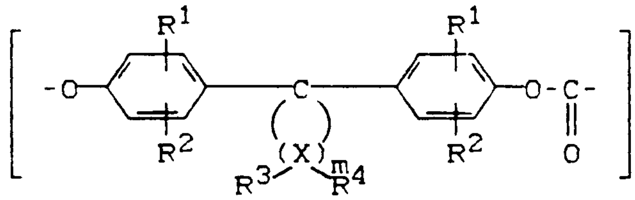

(Ia)

worin

X, $R^1$, $R^2$, $R^3$, $R^4$ und m die für die Formel (I) genannte Bedeutung haben, in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate enthalten somit jeweils zu 100 Mol-% komplementäre Mengen an anderen difunktionellen Carbonatstuktureinheiten, beispielsweise solchen der Formel (VIIa)

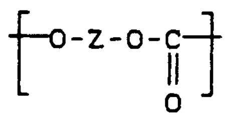

(VIIa),

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat. [-Z- in Formel (VIIa) entspricht dem -Z- in Formel (VII)].

Durch den Einbau der Diphenole der Formel (I) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole (I), in denen m 4 oder 5 ist, und ganz besonders für die Polycarbonate auf Basis der Diphenole (Ib)

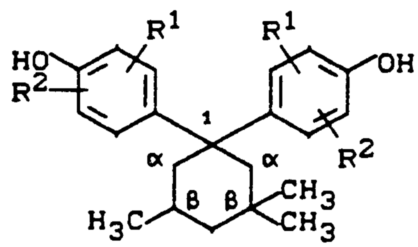

(Ib),

worin

$R^1$ und $R^2$ unabhängig voneinander die für Formel (I) genannte Bedeutung haben und besonders bevorzugt Wasserstoff sind.

Die bevorzugten Polycarbonate (a) sind solche, in denen in den Struktureinheiten der Formel (Ia) m = 4 oder 5 ist und ganz besonders solche aus Einheiten der Formel (Ic)

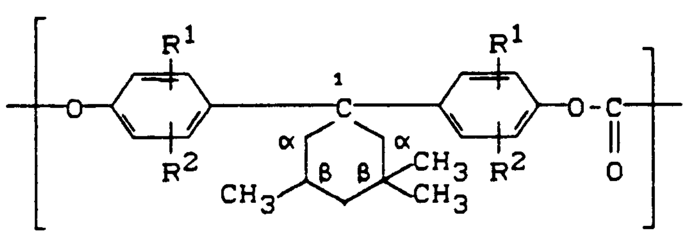

(Ic)

worin
$R^1$ und $R^2$ die für Formel (Ia) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

In den folgenden Beispielen B.1 bis B.5 wird die Herstellung von Polycarbonaten (a) erläutert. Die relative Viskosität ist gemessen an 0,5 gew.-%igen Lösungen der Polycarbonate in $CH_2Cl_2$.

Die Einfriertemperatur oder Glastemperatur wird gemessen durch Differential Scanning Calorimetry (DSC).

Beispiel B.1

31,0 g (0,1 Mol) des Diphenols der Formel (II), 33,6 g (0,6 Mol) KOH und 560 g Wasser werden in einer Inertgas-Atmosphäre unter Rühren gelöst. Dann fügt man eine Lösung von 0,188 g Phenol in 560 ml Methylenchlorid zu. In die gut gerührte Lösung wurden bei pH 13 bis 14 und 21 bis 25 °C 19,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,259.

Die Glastemperatur des Polymers wurde zu 233 °C bestimmt (DSC).

Beispiel B.2

68,4 g (0,3 Mol) Bisphenol A (2,2-Bis-(4-hydroxyphenyl)propan, 217,0 g (0,7 Mol) Diphenol der Formel (II), 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25 °C 198 g (2 Mol) Phosgen eingeleitet. Danach wird 1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,336.

Die Glastemperatur des Polymers wurde zu 212 °C bestimmt (DSC).

Beispiel B.3

Wie in Beispiel B.2 wurde eine Mischung aus 114 g (0,5 Mol) Bisphenol A und 155 g (0,5 Mol) Diphenol der Formel (II) zum Polycarbonat umgesetzt.

Das Polycarbonat zeigte eine relative Lösungsviskosität von 1,386.

Die Glastemperatur des Polymer wurde zu 195 °C bestimmt (DSC).

Beispiel B.4

Wie in Beispiel B.2 wurde eine Mischung aus 159,6 g (0,7 Mol) Bisphenol A und 93 g (0,3 Mol) Diphenol der Formel (II) zum Polycarbonat umgesetzt.

Das Polycarbonat zeigte eine relative Lösungsviskosität von 1,437.

Die Glastemperatur des Polymers wurde zu 180 °C bestimmt (DSC).

Beispiel B.5

31,0 g (0,1 Mol) Diphenol der Formel (II), 24,0 g (0,6 Mol) NaOH und 270 g Wasser werden in einer Inertgas-Atmosphäre unter Rühren gelöst. Dann fügt man eine Lösung von 0,309 g 4-(1,1,3,3-Tetramethylbutyl)-phenol in 250 ml Methylenchlorid zu. In die gut gerührte Lösung wurden bei pH 13 bis 14 und 21 bis 25 °C 19,8 g (0,2 Mol) Phosgen eingeleitet. Danach wird 0,1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,314.

Die Glastemperatur des Polymers wurde zu 234 °C bestimmt (DSC).

Zur Abschätzung des UV-Beständigkeit der neuen Polycarbonate wurde die Primärradikalbildung bei UV-Bestrahlung mit einer Quecksilberdampflampe (Kantenfilter 305 nm) im Vergleich zu einem Polycarbonat auf Basis des 2,2-Bis-(4-hydroxyphenyl)-propans bestimmt. Es zeigte sich, daß das Polycarbonat gemäß Beispiel B1 eine geringere Primärradikalbildungsrate und daher eine höhere UV-Beständigkeit aufweist.

Gegenstand der deutschen Patentanmeldung P 38 33 953.6 sind Mischungen enthaltend

a) 0,1 Gew.-% bis 99,9 Gew.-%, vorzugsweise 1 Gew.-% bis 98 Gew.-% und insbesondere 2,5 Gew.-% bis 90 Gew.-%,

hochmolekulare, thermoplastische, aromatische Polycarbonate mit $\overline{M}w$ (Gewichtsmittelmolekulargewichten) von mindestens 10 000, vorzusweise von 10 000 bis 300 000 und für Anwendungen im Spritzgußbereich insbesondere von 20 000 bis 80 000, die bifunktionelle Carbonatstruktureinheiten der Formel (Ia)

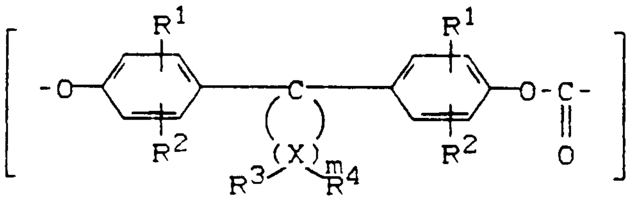
(Ia)

worin

X, $R^1$, $R^2$, $R^3$, $R^4$ und m die für Formel (I) genannte Bedeutung haben,

in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, neben der zu 100 Mol-% komplementären Menge anderer difunktioneller Carbonatstruktureinheiten enthalten, und

b) 99,9 Gew.-% bis 0,1 Gew.-%, vorzugsweise 99 Gew.-% bis 2 Gew.-% und insbesondere 97,5 Gew.-% bis 10 Gew.-%, an Elastomeren oder an anderen Thermoplasten als den Polycarbonaten der Komponente a),

wobei die Summe aus a) + b) jeweils 100 Gew.-% ist.

Besonders geeignete Polycarbonate (a) sind solche, in denen in den Struktureinheiten der Formel (Ia) m = 4 oder 5 ist und ganz besonders solche mit Struktureinheiten der Formel (Ic)

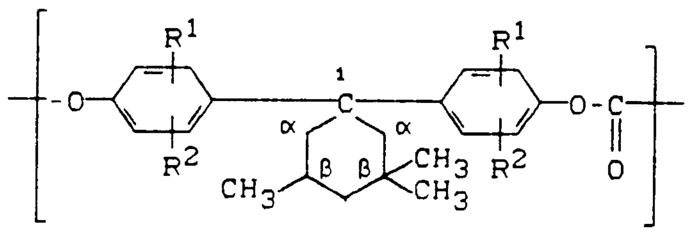
(Ic)

worin

$R^1$ und $R^2$ die für Formel (Ia) genannte Bedeutung haben, besonders bevorzugt aber Wasserstoff sind.

Als Komponente (b) geeignete andere Thermoplasten sind

b) amorphe Thermoplaste, vorzugsweise solche mit einer Glastemperatur von mehr als 40 °C, insbesondere von 60 °C bis 220 °C.

Beispiele für andere amorphe Thermoplasten b) sind amorphe Polymere aus der Klasse der Polycarbonate.

Amorphe Thermoplasten b) sind insbesondere andere Polycarbonate als die der deutschen Patentanmeldung P 3 832 396.6. Diese anderen Polycarbonate können sowohl Homopolycarbonate als auch Copolycarbonate sein, sie können sowohl linear als auch verzweigt sein Besonders bevorzugtes Bisphenol für die anderen thermoplastischen Polycarbonate der Komponente b) der erfindungsgemäßen Mischungen ist Bisphenol-A [= 2,2-Bis-(4-hydroxyphenyl)-propan].

Diese anderen thermoplastischen Polycarbonate sind bekannt.

Die Molekulargewichte $\overline{M}w$ (Gewichtsmittelmolekulargewicht, ermittelt nach der Gelpermeationschromatographie in Tetrahydrofuran) der anderen thermoplastischen Polycarbonate liegen zwischen 10.000 und 300.000, vorzugsweise zwischen 12.000 und 150.000.

Die anderen thermoplastischen Polycarbonate sind sowohl allein als auch im Gemisch miteinander für die Komponente b) der Mischungen verwendbar.

Die Mischungen aus den Polycarbonaten a) und den anderen Thermoplasten b) können beispielsweise durch Mischen von Lösungen der Komponenten a) und b) oder durch Mischen der Komponenten auf Knetern, Walzen oder Ein- bzw. Mehrwellenextrudern hergestellt werden.

Gegenstand der Erfindung der deutschen Patentanmeldung P 38 33 953.6 ist auch ein Verfahren zur Herstellung von Mischungen aus 0,1 Gew.-% bis 99,9 Gew.-%, vorzugsweise 1 Gew.-% bis 98 Gew.-% und insbesondere 2,5 Gew.-% bis 90 Gew.-%, Polycarbonat a) mit 99,9 Gew.-% bis 0,1 Gew.-%, vorzugsweise 99 Gew.-% bis 2 Gew.-% und insbesondere 97,5 Gew.-% bis 10 Gew.-%, anderen Thermoplasten b), das dadurch gekennzeichnet ist, daß alle Komponenten als Lösungen gemischt werden und dieses Gemisch in üblicher Weise aufgearbeitet wird, oder daß alle Komponenten in der Schmelze gemischt und homogenisiert werden.

Den erfindungsgemäßen Mischungen können noch die für die Komponenten b) üblichen Additive als Komponente c) z. B. Füllstoffe und/oder Nukleierungsmittel und/oder Fasern in den üblichen Mengen zugegeben werden.

Anorganische Füllstoffe sind beispielsweise Keramikfüllstoffe wie Aluminiumnitrit, Silicate, Titandioxid, Talkum, Kreide, Glimmer, Ruß, Fasern, Graphit sind beispielsweise solche aus Glas, aus Kohlenstoff oder aus flüssig-kristallinen Polymeren.

Nukleierungsmittel können beispielsweise sein Bariumsulfat, $TiO_2$.

Diese Additive können in den üblichen Mengen entweder vor der Herstellung der erfindungsgemäßen Mischungen den Komponenten b) oder zusammen mit den Polycarbonaten der Komponente a) den Komponenten b) zugemischt werden oder nachträglich den erfindungsgemäßen Mischungen aus den Komponenten a) und b) eingearbeitet werden.

Ebenso können den Polycarbonaten der Komponente a) - vor oder während oder nach der Abmischung mit dem Komponenten b) - die genannten Additive in den üblichen Mengen zugesetzt werden.

Die Mischungen lassen sich zu beliebigen Formkörpern auf üblichen Maschinen in üblicher Weise verarbeiten.

Die Mischungen und die daraus hergestellten Formkörper sind verwendbar im Automobilbereich und im Elektrobereich, beispielsweise zur Herstellung von Stoßstangen und Gehäusen.

Beispiele

C) Komponenten

C1) entspricht Beispiel B1)

C3) Bisphenol-A-Polycarbonat mit einer relativen Viskosität $\eta_{rel}$ (gemessen in $CH_2Cl_2$ bei 25 °C und C = 0,5 g/dl) von 1,28

D) Abmischungen

D2) 30 g der Substanz C1 wurden mit 30 g der Substanz C3) in jeweils 200 ml Methylenchlorid gelöst. Anschließend wurden die Lösungen vereinigt, die Lösung eingedickt wie in Beispiel D1), und eine Folie einer Dicke von 210 µm hergestellt. 6 Teilstücke der Folie wurden wie in Beispiel D1) übereinandergelegt und bei 250 °C unter einem Druck von 210 bar in Luft 5 Minuten zu einer rechteckigen Formteil mit einer Dicke von 0.989 mm verpreßt.

E) Prüfung der nach D hergestellten Proben.

Von beiden Proben wurde der Schubmodul mit einem Torsionspendel der Firma Brabender, Typ 802301 oberhalb Raumtemperatur gemessen. Die Probe wurde mit einer Aufheizrate von 1 K/min an die unten genannte Temperatur herangeführt, die Proben erführen während der gesamten Meßzeit eine Zugbelastung von 10 p. Das Drehmoment betrug 1570 $gcm^2$). Bei Werten des Moduls unterhalb 10 Mpa sind Verformungen der Probe deutlich wahrnehmbar, weil die Probe nicht mehr genügend innere Festigkeit hat.

Ergebnisse:

| Nr. des Beispiels | Schub-Modul in MPa bei | | |
|---|---|---|---|
| | T = 50 °C | T = 160 °C | T = 200 °C |
| Substanz C3)<br>D2) | 950<br>950 | < 10<br>230 | < 10<br>57 |

In der deutschen Patentanmeldung P 3 840 166.5 sind Folien aus Mischungen der speziellen neuen Polycarbonate a) mit anderen thermoplastischen Polycarbonaten b1) beschrieben, wobei die Gewichtsverhältnisse von a) zu b1) von 0,1 Gew.-% zu 99,9 Gew.-% bis 99,9 Gew.-% zu 0,1 Gew.-%, vorzugsweise von 5 Gew.-% zu 95 Gew.-% bis 95 Gew.-% zu 5 Gew.-% und insbesondere von 10 Gew.-% zu 90 Gew.-% bis 90 Gew.-% zu 10 Gew.-% betragen.

Es hat sich nun gezeigt, daß die Polycarbonate der Komponente a) der deutschen Patentanmeldung P 3 833 953.6, die an difunktionellen Carbonatsstruktureinheiten nur solche der Formeln (Ia) bei denen m = 4 oder 5 ist und gegebenenfalls (VIIa) enthalten, in Abmischung mit den gemäß Komponente b) geeigneten anderen thermoplastischen Polycarbonaten, die an difunktionellen Carbonatstruktureinheiten nur solche der Formel (VIIa) enthalten, in dem in P 3 833 953.6 bereits beanspruchten Mischungsbereich von 0,1 Gew.-% zu 99,9 Gew.-% bis von 99,9 Gew.-% zu 0,1 Gew.-% zu 0,1 Gew.-% transparente Mischungen bilden können, die sich insbesondere für optische Anwendungen insbesondere zur Herstellung von optischen Datenspeichern, wie beispielsweise Compact Discs eignen.

Es hat sich nämlich gezeigt, daß bei einem molaren Anteil der difunktionellen Struktureinheiten (Ia) von 0,1 Mol-% bis 55 Mol-% oder von 65 Mol-% bis 99,9 Mol-% der molaren Gesamtmenge an difunktionellen Struktureinheiten (Ia) + (VIIa), Transparenz auftritt, wobei dies unabhängig von der Verteilung der Struktureinheiten (Ia) und (VIIIa) auf die Polycarbonat-Komponenten a) und b) ist.

Die Herstellung von Compact Discs aus Mischungen von Thermoplasten ist bekannt. (Siehe beispielsweise DE-A-3 704 688).

Gegenstand der vorliegenden Erfindung ist somit die Verwendung der Mischungen gemäß deutscher Patentanmeldung P 3 833 953.6 enthaltend 0,1 Gew.-% bis 99,9 Gew.-% Polycarbonate der Komponete a) der deutschen Patentanmeldung P 3 833 953.6, die an difunktionellen Carbonatstruktureinheiten nur solche der Formeln (Ia) und gegebenenfalls (VIIa) enthalten, und 99,9 Gew.-% bis 0,1 Gew.-% andere thermoplastische Polycarbonate gemäß Komponente b1) der deutschen Patentanmeldung P 3 833 953.6, die an difunktionellen Carbonatstruktureinheiten nur solche der Formel (VIIa) enthalten, wobei die Summe der Gew.-% von a) und b) jeweils 100 Gew.-% ist, in der Optik, insbesondere zur Herstellung von optischen Datenspeichern, ganz besonders zur Herstellung von Compact Discs, wobei der molare Anteil der Struktureinheiten (Ia) von 0,1 Mol-% bis 55 Mol-% oder von 65 Mol-% bis 99,9 Mol-%, vorzugsweise von 0,5 Mol-% bis 50 Mol-% oder von 70 Mol-% bis 99,9 Mol-% und insbesondere von 1 Mol-% bis 45 Mol-% oder von 80 Mol-% bis 99,9 Mol-% der molaren Gesamtmenge an Struktureinheiten (Ia) + (VIIa) in den aus den Polycarbonatkomponenten a) und b) bestehenden Mischungen, beträgt.

Die molare Menge an Struktureinheiten (VIIa) ist somit jeweils die zu (Ia) komplimentäre Menge, bezogen jeweils auf 100 Mol-% aus (Ia) + (VIIa).

Die Polycarbonate der Komponente a) sind solche aus den Diphenolen der Formel (I) der deutschen Patentanmeldung P 38 33 953.6, gegebenenfalls im Gemisch mit den Diphenolen der Formel (VII) der deutschen Patentanmeldung P 38 33 953.6.

Die anderen thermoplastischen Polycarbonate gemäß Komponente b1) der deutschen Patentanmeldung P 38 33 953.6 sind, wie bereits erwähnt, solche auf Basis der Diphenole der Formel (VII) der deutschen Patentanmeldung P 38 33 953.6, vorzugsweise der Formel (VIIb)

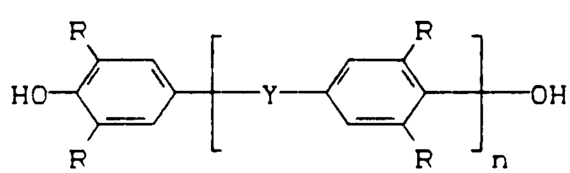

(VIIb)

worin

n 0 oder 1 ist,

Y eine Einfachbindung, $C_1$-$C_{10}$-Alkylen, $C_2$-$C_{10}$-Alkyliden, $C_5$-$C_{12}$-Cycloalkylen, $C_5$-$C_{12}$-Cycloalkyliden, -O-, -S-, -SO-, $-SO_2-$ oder -CO- bedeutet, und

R H, $CH_3$, Cl oder Brom ist, wobei

R an den Phenylringen gleich oder verschieden sein kann.

Geeignete Diphenole der Formel (VIIb) sind die jeweiligen, bereits unter Formel (VII) der deutschen Patentanmeldung P 38 33 953.6 genannten.

Bevorzugte Diphenole der Formel (VIIb) sind insbesondere Bisphenol-Z, Bisphenol-A und Tetramethylbisphenol-A.

Bevorzugte Diphenole zur Herstellung der Polycarbonat-Komponente a) sind die Diphenole (II) und (III) der deutschen Patentanmeldung P 38 33 953.6.

Bevorzugte Polycarbonatabmischungen a) + b) sind Mischungen aus den Polycarboanten auf Basis der vorstehend genannten jeweils bevorzugten Diphenole.

Die erfindungsgemäß verwendbaren Polycarbonate gemäß Komponente a) und b) können unabhängig voneinander linear oder verzweigt sein.

Die Molekulargewichte der einzelnen Komponenten können im Prinzip in einem breiten Bereich variieren. Bevorzugt sind die Molekulargewichte Mw (Gewichtsmittel, bestimmt mit Hife der Gelpermeationschromatographie) der eingesetzten Polycarbonate für die Komponente a) zwischen 10 000 g/mol und 190 000 g/mol, für die Komponente b) zwischen 12 000 g/mol und 130 000 g/mol.

Die molekulare Uneinheitlichkeit Un = Mw/Mn-1 (Mn = Zahlengemitteltes Molekulargewicht, bestimmt mit Hilfe der Gelpermeationschromatographie) kann im Prinzip ebenfalls in einem breiten Bereich variieren. Bevorzugt sind diejenigen Mischungen, für die wenigstens für eine der Komponenten a) oder b) Un kleiner als 2, bevorzugt kleiner als 1,3, insbesondere kleiner als 0,9 ist. Als besonders vorteilhaft erweisen sich Komponenten a) und b), wenn für beide Komponenten die molekulare Uneinheitlichkeit Un = Mw/Mn-1 kleiner als 2 ist.

Die Anteile an Diphenolen der Formel (I), insbesondere der Formeln (II) und/oder (III), zur Herstellung der Polycarbonatkomponente a) variieren im allgemeinen zwischen 0,1 und 100 Mol-%, bezogen auf die jeweils eingesetzte Diphenol-Gesamtmenge zur Herstellung der Polycarbonatkomponente a) und richten sich nach der erfindungsgemäßen Maßgabe betreffend die Struktureinheiten (Ia) und (VIIa).

Dem Fachmann ist aufgrund dieser erfindungsgemäßen Maßgabe vertraut, wie er je nach eingesetztem Molverhältnis an Bisphenolen innerhalb der einzelnen Polycarbonate a) bzw. b) die Gewichtsverhältnisse einstellt. Es kann z.B. vorteilhaft sein, einen besonders hohen molaren Anteil an Bisphenolen der Formel (I) zur Herstellung des Polycarbonats a) zu verwenden. In diesem Fall ist es besonders günstig, entweder nicht mehr als 40 Gew.-% dieser Polycarbonate a) einzusetzen oder mehr als 80 Gew.-% dieser Polycarbonate einzusetzen.

Wenn man nur Bisphenol-Z, Bisphenol-A und Tetramethylbisphenol-A mit den Diphenolen der Formel (I), insbesondere mit dem Diphenol (II) zur Herstellung der Polycarbonatkomponenten a) und b) kombiniert, kann es von Vorteil sein, wenn man nur wenige Mol-% an Diphenolen der Formel (I) für die Herstellung der Polycarbonate a) verwendet, dann aber die Komponente a) in einer gewichtsmäßig höheren Konzentration einsetzt. Im allgemeinen kann man entsprechend der oben definierten Maßgabe z.B. ein Polycarbonat a) mit einem molaren Anteil an Diphenolen (I), insbesondere (II), von etwa 10 bis 55 Mol-% mit wenigstens 10 Gew.-%, bevorzugt mit mehr als 30 Gew.-% an Polycarbonaten b) vermischen, solange insbesondere die erfindungsgemäße Maßgabe gewährleistet ist.

Die vorstehend für optische Anwendungen geeigneten Polycarbonatmischungen haben neben Transparenz insbesondere eine hohe Wärmeformbeständigkeit. Als transparent gilt im vorliegenden Zusammenhang eine Polymermischung, wenn bei einer Probendicke von mindestens 200 $\mu$m der Haze-Index (bestimmt nach ASTM D 1003) kleiner als 10 % ist.

Die Herstellung der erfindungsgemäß für optische Anwendungen geeigneten Polycarbonatmischungen kann bei Temperaturen zwischen 250 °C und 400 °C in den üblichen Mischaggregaten erfolgen oder über die Lösungen der Polycarbonatkomponenten a) und b) in geeigneten Lösungsmitteln wie beispielsweise $CH_2Cl_2$ und anschließendes Ausdamfen des Lösungsmittels erfolgen.

Die Weiterverarbeitung der Polycarbonatmischungen über die Granulatzwischenstufe oder unmittelbar aus dem Mischungsvorgang zu Formteilen für optische Anwendungen erfolgt in bekannter Weise.

Geeignete Formteile für optische Anwendungen sind beispielsweise Scheiben, Platten, Drähte, Fasern und andere dreidimensionale Bauteile.

Im erfindungsgemäßen Zusammenhang wird Verwendung in der Optik bzw. optische Anwendung als Anwendung im Automobilbereich, als kombinierte Sicht- und Schutzscheibe, als Abdeckplatte für elektrische

Anzeigegeräte, als Signalleuchten, als Schriftträger und Schriftüberträger, als Linsen für Photo- und Filmkameras, als Lichtwellenleiter in Form von Fasern und Kabeln und natürlich als Datenspeicher, insbesondere als Compact Disc verstanden.

Es kann sinnvoll sein, den erfindungsgemäß zu verwendenden Mischungen die für optische Anwendung übliche Additive, wie Farbstoffe, UV-Absorber, Stabilisatoren gegen Hitze und $H_2O$ u.a. in den üblichen Mengen zuzugeben.

Gegenstand der vorliegenden Erfindung ist somit auch die Verwendung der erfindungsgemäßen Polycarbonatgemische einschließlich der für optische Anwendungen üblichen Additive in der Optik.

Beispiele D

A) Als Diphenol wurde das der Formel (II) des Beispiels A der deutschen Patentanmeldung P 38 33 953.6 (Seite 12 der vorliegenden Patentanmeldung eingesetzt.

B) Herstellung des Copolycarbonats B.6

148,2 g (0,65 Mol) 2,2-Bis-(4-hydroxyphenyl)-propan, 108,5 g (0,35 Mol) des Disphenols des Beispiels A der deutschen Patentanmeldung P 38 33 953.6, 336,6 g (6 Mol) KOH und 2700 g Wasser werden in einer Inertgas-Atmosphäre unter Rühren gelöst. Dann fügt man eine Lösung von 8,86 g Isooctylphenol in 2500 ml Methylenchlorid zu. In die gut gerührte Lösung wurden bei pH 13-14 und 21-25 °C 198 g (2 mol) Phosgen eingeleitet. Danach wird 1 ml Ethylpiperidin zugegeben und noch 45 Min. gerührt. Die bisphenolatfreie wäßrige Phase wird abgetrennt, die organische Phase nach Ansäuren mit Phosphorsäure mit Wasser neutral gewaschen und vom Lösungsmittel befreit. Das Polycarbonat zeigte eine rel. Lösungsviskosität von 1,20. ($\eta_{rel}$ wurde, gemessen an 0,5 gew.-%igen Lösung des Polycarbonats in $CH_2Cl_2$) und eine $T_g$ 185 °. [Die Einfrier- oder Glastemperatur wurde durch Differential Scanning Calorimetry gemessen (DSC)].

Die Herstellung des Polycarbonats B7

Die Herstellung von B7 entspricht der von B.1, wobei als Kettenabbrecher Isooctylphenol in Mengen von 1,6 Mol-% eingesetzt wurde. Das erhaltene Granulat hatte ein $\eta_{rel}$ 1,30 und einen $T_g$ 237 °C, beide Werte wie vorstehend für B6 beschrieben bestimmt.

Die Herstellung des Polycarbonats B8

Die Herstellung von B8, wobei 102,6 g (45 Mol-%) 2,2-Bis-(4-hydroxyphenyl)-propan und 170,5 g (55 Mol-%) des Diphenols des Beispiels A der deutschen Patentanmeldung P 38 33 953.6 und 4,74 g Isooctylphenol als Kettenabbrecher und 2 Mol Phosgen eingesetzt wurden, erfolgte wie vorstehend für B6 beschrieben.

Das erhaltene Granulat hatte ein $\eta_{rel}$ von 1,29 und eine $T_g$ von 204 °C, beide Werte, wie vorstehend für B6 beschrieben, bestimmt.

Herstellung des Polycarbonats B9

Die Herstellung von B9, wobei 182,4 g (80 Mol-%) 2,2-Bis-(4-hydroxyphenyl)-propan und 62 g (20 Mol-%) des Diphenols des Beispiels A der deutschen Patentanmeldung P 38 33 953.6 und 6,18 g (0,03 Mol) Isooctylphenol als Kettenabbrecher und Phosgen eingesetzt wurden, erfolgte ebenfalls wie vorstehend für B6 beschrieben.

Das erhaltene Granulat hatte ein $\eta_{rel}$ von 1,30 und einen $T_g$ von 173 °C, beide Werte wie für B6 beschrieben, bestimmt.

C. Komponenten

$C_1$) = B6

$C_2$) ist ein Homopolycarbonat aus 2,2-Bis-(4-hydroxyphenyl)-propan mit einem $\eta_{rel}$ 1,20, und einen $T_g$ von 135 °C, wobei beide Werte wiederum wie für B6 beschrieben wurde.

$C_3$) = B7

$C_4$) = B8

$C_5$) = B9

$C_6$) ist wiederum ein Homopolycarbonat aus 2,2-Bis-(4-hydroxyphenyl)-propan mit einem $\eta_{rel}$ von 1,28 und einen $T_g$ von 148 °C, gemessen wie für B6 beschrieben, und mit einer Uneinheitlichkeit
$U = \frac{Mw}{Mn} - 1$ von 1,01, wobei
Mw = 28200 und
Mn = 14010 sind.

$C_7$) entspricht $C_6$), jedoch mit einer Uneinheitlichkeit ($\frac{Mw}{Mn}$ - 1) von 0,8, einem $\eta_{rel}$ von 1,22 und einen $T_g$ von 143 °C, gemessen wiederum wie für $C_6$ erläutert.

$C_8$) ist ein Homopolycarbonat aus 2,2-Bis-(4-hydroxy-3,5-dimethylphenyl)-propan mit einem $\eta_{rel}$ von 1,29, einen $T_g$ von 197 °C, gemessen wiederum wie für $C_6$ erläutert.

D) Abmischungen

$D_1$) 50 Teile $C_1$ und 50 Teile $C_2$ wurden auf einem Zweiwellenextruder bei 320 °C in der Schmelze homogenisiert. Von der erhaltenen Probe wurde auf einer Netstal-Spritzgußmaschine eine Compact Disc mit einem Durchmesser von 12 cm Durchmesser verspritzt (Massetemperatur 350-360 °C). An der erhaltenen Compact Disc wurde die Doppelbrechung in axialer Richtung bestimmt, Die Doppelbrechung wurde anhand von Gangunterschiedsmessungen durch Verwendung eines üblichen Komparators mittels eines Polarisationsmikroskops beurteilt. Die Beurteilung der Compact Disc bezüglich Transparenz erfolgte visuell. Die Glastemperatur Tg der untersuchten Probe wurde wie bereits erwähnt durch DSC bestimmt: Gangunterschied (nm/mm) + 6; $T_g$ 164 °C, Transparenz vorhanden.

$D_2$) 90 Gew.-% $C_4$ und 10 Gew.-% $C_7$
$D_3$) 75 Gew.-% $C_4$ und 25 Gew.-% $C_6$
$D_4$) 80 Gew.-% $C_3$ und 20 Gew.-% $C_6$
$D_5$) 70 Gew.-% $C_4$ und 30 Gew.-% $C_6$
$D_6$) 80 Gew.-% $C_5$ und 20 Gew.-% $C_6$
$D_7$) 70 Gew.-% $C_3$ und 30 Gew.-% $C_6$
$D_8$) 50 Gew.-% $C_3$ und 50 Gew.-% $C_8$
$D_9$) 80 Gew.-% $C_3$ und 20 Gew.-% $C_8$

Die Mischungen $D_2$) bis $D_9$) wurden auf einem Zweiwellenextruder ZSK 32 der Fa. Werner und Pfleiderer in an sich bekannter Weise bei Temperaturen von 300 °C bis 330 °C vermischt und granuliert.

Anschließend wurde gemäß ASTM D 1003 der Haze-Index an 0,2 nm dicken Proben bestimmt und in allen Fällen Transparenz ermittelt.

**Patentansprüche**

**1.** Verwendung von Mischungen in der Optik enthaltend

a) 0,1 Gew.-% bis 99,9 Gew.-% hochmolekulare, thermoplastische, aromatische Polycarbonate mit $\overline{Mw}$ (Gewichtsmittelmolekulargewichten) von mindestens 10.000, die bifunktionelle Carbonatstruktureinheiten der Formel (Ia)

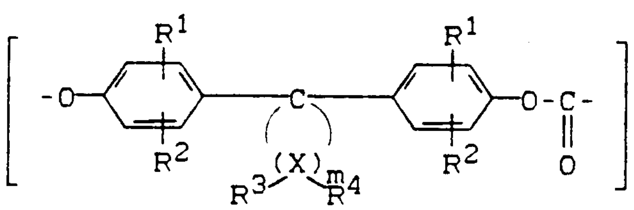

(Ia)

worin

| | |
|---|---|
| $R^1$ und $R^2$ | unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, |
| m | 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl sind,

in Mengen von 100 Mol-% bis 2 Mol-%, bezogen jeweils auf die Gesamtmenge von 100 Mol-% an

difunktionellen Carbonatstruktureinheiten, neben der zu 100 Mol-% komplementären Menge anderer difunktioneller Carbonatstruktureinheiten der Formel (VIIa)

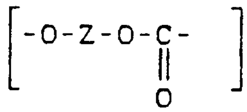

(VIIa)

worin

-Z- ein aromatischer Rest mit 6 bis 30 C-Atomen ist, wobei die Carbonatstruktureinheiten der Formel (VIIa) von den Carbonatstruktureinheiten der Formel (Ia) verschieden sind, und

b) 99,9 Gew.-% bis 0,1 Gew.-% anderer thermoplastischer Polycarbonate als die der Komponente (a), die an difunktionellen Carbonatstruktureinheiten nur solche der Formel (VIIa) enthalten, und gegebenenfalls

c) für optische Anwendungen übliche Additive, wobei die Summe der Gew.-% von a) und b) jeweils 100 Gew.-% ist, und wobei der molare Anteil der Struktureinheiten (Ia) von 0,1 Mol-% bis 55 Mol-% oder von 65 Mol-% bis 99,9 Mol-%, der molaren Gesamtmenge an Struktureinheiten (Ia) + (VIIa) in den aus den Polycarbonatkomponenten a) + b) bestehenden Mischungen, beträgt, wobei die Verwendung in Form von Folien ausgenommen ist.

**2.** Verwendung gemäß Anspruch 1, dadurch gekennzeichnet, daß der molare Anteil von Struktureinheiten (Ia) von 0,5 Mol-% bis 50 Mol-% oder von 70 Mol-% bis 99,9 Mol-%, der molaren Gesamtmenge an Struktureinheiten (Ia) + (VIIa), beträgt.

**3.** Verwendung gemäß Anspruch 1, dadurch gekennzeichnet, daß der molare Anteil von (Ia) von 1 Mol-% bis 45 Mol-% oder von 80 Mol-% bis 99,9 Mol-%, der molaren Gesamtmenge an Struktureinheiten (Ia) + (VIIa), beträgt.

**4.** Verwendung der Mischungen der Ansprüche 1 bis 3 zur Herstellung von optischen Datenspeichern.

**5.** Verwendung der Mischungen der Ansprüche 1 bis 3 zur Herstellung von Compact Discs.

**6.** Verwendung gemäß Anspruch 1 von Polycarbonatmischungen bestehend aus

a) 10,1 Gew.-% bis 89,9 Gew.-% an Komponente a) des Anspruchs 1, und

b) 89,9 Gew.-% bis 10,1 Gew.-% an Komponente b) des Anspruchs 1, wobei die Summe aus a) + b) jeweils 100 Gew.-% ist, wobei der molare Anteil von (Ia) dem des Anspruchs 1 entspricht, wobei das Gewichtsverhältnis von 50 Gew.-% (Ia) zu 50 Gew.-% (VIIa) ausgenommen ist und wobei Poly-(meth)acrylate mit aufgepfropften Polycarbonatketten als Polycarbonatkomponenten a) oder b) ausgenommen sind.

## Claims

**1.** Use in optics of blends containing

a) 0.1 wt.% to 99.9 wt.% of high molecular weight, thermoplastic, aromatic polycarbonates with $\overline{M}_w$ - (weight average molecular weights) of at least 10,000 which contain bifunctional carbonate structural units of the formula (Ia)

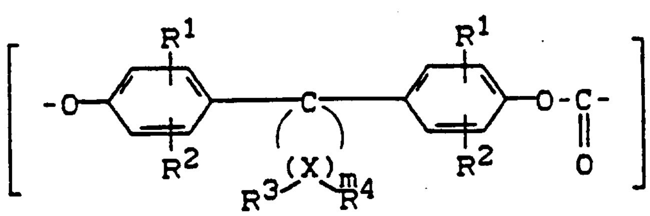

(Ia)

in which

$R^1$ and $R^2$ mutually independently mean hydrogen, halogen, $C_1$-$C_8$ alkyl, $C_5$-$C_6$ cycloalkyl, $C_6$-$C_{10}$ aryl and $C_7$-$C_{12}$ aralkyl,
m means 4 or 5,
$R^3$ and $R^4$ individually selectably for each X and mutually independently mean hydrogen or $C_1$-$C_6$ alkyl and
X means carbon,

providing that on at least one atom X $R^3$ and $R^4$ are simultaneously alkyl,
in quantities of 100 mol.% to 2 mol.%, in each case relative to the total quantity of 100 mol.% of difunctional carbonate structural units, in addition to the complementary quantity up to 100 mol.% of other difunctional carbonate structural units of the formula (VIIa)

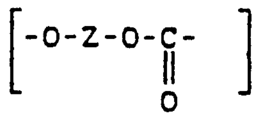 (VIIa)

in which
-Z- is an aromatic residue with 6 to 30 C atoms, wherein the carbonate structural units of the formula (VIIa) differ from the carbonate structural units of the formula (Ia), and

b) 99.9 wt.% to 0.1 wt.% of thermoplastic polycarbonates other than component (a) which contain as their difunctional carbonate structural units only those of the formula (VIIa), and optionally
c) additives customary for optical applications, wherein the sum of the weight percentages of a) and b) is in each case 100 wt.%, and wherein the molar proportion of the structural units (Ia) is from 0.1 mol.% to 55 mol.% or from 65 mol.% to 99.9 mol.%, of the total molar quantity of structural units (Ia) + (VIIa) in the blends consisting of the polycarbonate components a) + b), wherein use in film form is excepted.

**2.** Use according to claim 1, characterised in that the molar proportion of structural units (Ia) is from 0.5 mol.% to 50 mol.% or from 70 mol.% to 99.9 mol.% of the total molar quantity of structural units (Ia) + (VIIa).

**3.** Use according to claim 1, characterised in that the molar proportion of (Ia) is from 1 mol.% to 45 mol.% or from 80 mol.% to 99.9 mol.% of the total molar quantity of structural units (Ia) + (VIIa).

**4.** Use of the blends of claims 1 to 3 for the production of optical data storage media.

**5.** Use of the blends of claims 1 to 3 for the production of compact discs.

**6.** Use according to claim 1 of polycarbonate blends consisting of
a) 10.1 wt.% to 89.9 wt.% of component a) of claim 1 and
b) 89.9 wt.% to 10.1 wt.% of component b) of claim 1, wherein the sum of a) + b) is in each case 100 wt.%, wherein the molar proportion of (Ia) corresponds to that of claim 1, wherein the weight ratio of 50 wt.% of (Ia) to 50 wt.% of (VIIa) is excepted and wherein poly(meth)acrylates with grafted polycarbonate chains are excepted as polycarbonate components a) or b).

## Revendications

**1.** Utilisation en optique de mélanges contenant :
a) 0,1 % en poids à 99,9 % en poids de polycarbonates aromatiques thermoplastiques à poids moléculaire élevé ayant une $\overline{M}_p$ (poids moléculaire moyen en poids) d'au moins 10 000, comportant des motifs structurels carbonates bifonctionnels de formule (Ia) :

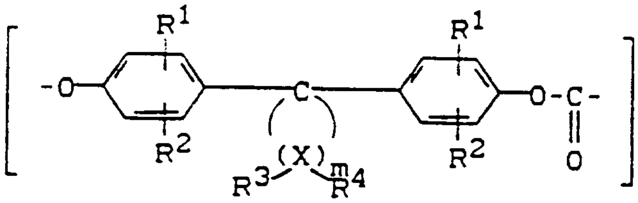 (Ia)

dans laquelle
$R^1$ et $R^2$ représentent chacun, indépendamment l'un de l'autre, un atome d'hydrogène, un atome d'halogène, un reste alkyle en $C_1$ à $C_8$, cycloalkyle en $C_5$ à $C_6$, aryle en $C_6$ à $C_{10}$ et aralkyle en $C_7$ à $C_{12}$,
m vaut 4 ou 5,
$R^3$ et $R^4$ peuvent être choisis individuellement, pour chaque X et indépendamment l'un de l'autre, parmi un atome d'hydrogène ou un reste alkyle en $C_1$ à $C_6$, et X représente du carbone,
à la condition que, sur au moins un atome X, les restes $R^3$ et $R^4$ soient simultanément chacun un reste alkyle,
en des quantités de 100 moles % à 2 moles %, par rapport à chaque fois à la quantité totale de 100 moles % de motifs structurels carbonates difonctionnels, en plus de la quantité nécessaire pour compléter à 100 moles % d'autres motifs structurels carbonates difonctionnels de formule (VIIa) :

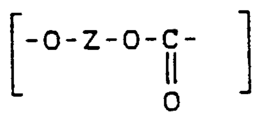 (VIIa)

dans laquelle
-Z- représente un reste aromatique ayant 6 à 30 atomes de carbone, les motifs structurels carbonates de formule (VIIa) étant différents des motifs structurels carbonates de formule (Ia), et
b) 99,9 % en poids à 0,1 % en poids d'autres polycarbonates thermoplastiques que ceux du constituant (a), qui ne contiennent comme motifs structurels carbonates difonctionnels que ceux de formule (VIIa), et éventuellement
c) des additifs usuels pour des applications en optique, la somme des pourcentages en poids de (a) et de (b) formant toujours 100 % en poids, et la proportion molaire des motifs structurels (Ia) étant de 0,1 mole % à 55 moles % ou de 65 moles % à 99,9 moles % ou la quantité molaire globale des motifs structurels (Ia) + (VIIa) dans les mélanges consistant en les constituants polycarbonates (a) + (b), à l'exclusion de l'utilisation sous forme de feuille.

**2.** Utilisation selon la revendication 1, caractérisée en ce que la proportion molaire des motifs structurels (Ia) est de 0,5 mole % à 50 moles % ou de 70 moles % à 99,9 moles % de la quantité molaire globale des motifs structurels (Ia) + (VIIa).

**3.** Utilisation selon la revendication 1, caractérisée en ce que la proportion molaire de (Ia) est de 1 mole % à 45 moles % ou de 80 moles % à 99,9 moles % de la quantité molaire globale des motifs structurels (Ia) + (VIIa).

**4.** Utilisation des mélanges des revendications 1 à 3 pour la production de mémoire optique de données.

**5.** Utilisation des mélanges des revendications 1 à 3 pour la production de disques compacts ("Compact Discs").

**6.** Utilisation selon la revendication 1 de mélanges de copolycarbonates consistant en :
a) 10,1 % en poids à 89,9 % en poids du constituant (a) de la revendication 1, et
b) 89,9 % en poids à 10,1 % en poids du constituant (b) de la revendication 1, la somme de (a) + (b) formant à chaque fois 100 % en poids, la proportion molaire de (Ia) correspondant à ce qui est indiqué à la revendication 1, le rapport pondéral de 50 % en poids de (Ia) pour 50 % en poids de (VIIa) étant exclus et des poly(méth)acrylates comportant des chaînes polycarbonates greffées

comme constituant polycarbonate (a) ou (b) étant exclus.